# EUROPEAN PATENT APPLICATION

(11) **EP 4 645 011 A1**
(43) Date of publication of application: **05.11.2025**
(21) Application number: 24792896.3
(22) Date of filing: 02.04.2024
(51) Int. Cl.: G05B 19/418

(54) **APPARATUS FOR MANAGING MANUFACTURING PROCESS OF BATTERY**

(30) Priority: 17.04.2023 KR 20230050137
(71) Applicant: LG Energy Solution, Ltd., Seoul 07335 (KR)
(72) Inventor: JUNG, Juhwa, Daejeon 34122 (KR); PARK, San, Daejeon 34122 (KR); OH, Sang Hun, Daejeon 34122 (KR); LEE, Jiseok, Daejeon 34122 (KR)
(74) Representative: Plasseraud IP
(86) International application number: PCT/KR2024/004234
(87) International publication number: WO 2024/219710

(57) **Abstract**

An apparatus for managing a manufacturing process of a battery according to one embodiment of the present disclosure comprises: an input unit that receives input of at least one selected from a plurality of products and at least one selected from a plurality of processes, a display unit that outputs recipes corresponding to the selected products and processes, and a control unit that controls the input unit and the display unit, wherein recipes are respectively preset corresponding to each of the plurality of products and each of the plurality of processes.

## Description

### [TECHNICAL FIELD]

### Cross Citation with Related Application(s)

This application claims the benefit of Korean Patent Application No. 10-2023-0050137 filed on April 17, 2023 in the Korean Intellectual Property Office, the disclosure of which is incorporated herein by reference in its entirety.

The present disclosure relates to an apparatus for managing a manufacturing process of a battery, and more particularly, an apparatus that allows an operator to more efficiently input a recipe set value and manage the manufacturing process of the battery while preventing the operator from erroneously inputting the recipe set value into a battery manufacturing equipment.

### [BACKGROUND]

In modern society, as portable devices such as a mobile phone, a notebook computer, a camcorder and a digital camera, and an energy storage system (ESS) have been daily used, technologies of a field related thereto has been actively developed. In addition, as a secondary battery capable of being charged and discharged is used as a power source for an electric vehicle (EV), a hybrid electric vehicle(HEV), a plug-in hybrid electric vehicle (P-HEV) and the like as a method for solving air pollution and the like caused by existing gasoline vehicles using fossil fuel, a necessity for the development of the secondary battery is increasing.

The manufacturing process of such a lithium secondary battery is roughly classified into an electrode process, an assembly process, and a formation process, and each process again consists of detailed processes.

The manufacturing process of such a lithium secondary battery goes through several steps, and therefore, when inputting a value into an equipment used in the secondary battery manufacturing process, there is a need for a method that prevent an operator from inputting an incorrect value, and allows an operator to more efficiently input values and thus manage the manufacturing process of the battery more accurately and effectively.

### [DETAILED DESCRIPTION OF THE INVENTION]

### [Technical Problem]

It is an objective of the present disclosure to provide an apparatus that manages a manufacturing process of a battery more accurately and effectively.

However, the objective of the present disclosure is not limited to the aforementioned one, and may be extended in various ways within the scope of the technical idea included in the present disclosure.

### [Technical Solution]

According to one embodiment of the present disclosure, there is provided an apparatus for managing a manufacturing process of a battery, the apparatus comprising: an input unit that receives input of at least one selected from a plurality of products and at least one selected from a plurality of processes; a display unit that outputs recipes corresponding to the selected products and processes; and a control unit that controls the input unit and the display unit, wherein recipes are respectively preset corresponding to each of the plurality of products and each of the plurality of processes.

The managing apparatus may execute a registration mode that presets recipes corresponding to products and processes, and a process execution mode that transmits process execution instructions according to the recipes corresponding to products and processes to the equipment for the process.

The recipe may include at least one parameter that is applied to the equipment apparatus for the process according to products and processes, and a target value for each parameter.

The target value for at least a part of the at least one parameter is changeable, and an allowable change range may include at least one of an upper limit and a lower limit.

In the process execution mode, the display unit primarily displays recipes corresponding to the input products and processes, and when the input unit receives input of a process execution instruction, the process may be executed in the process equipment according to the primarily displayed recipe.

In the process execution mode, when the input unit receives input of a value changed from the preset target value of the displayed recipe, the changed value may be transmitted to the control unit.

In the process execution mode, the control unit determines whether the changed value falls within the range of the upper and lower limits, and when the value falls within the range of the upper and lower limits, the recipe is temporarily changed to the changed value, the display unit subsequently displays the changed value, and when the input unit receives input of a process execution instruction, the process may be executed in the equipment for the process according to the subsequently displayed recipe.

In the process execution mode, the control unit determines whether the changed value falls within the range of the upper and lower limits, and when the value is outside the range of the upper and lower limits, the changed value is invalidated and restored to the preset target value, the display unit subsequently displays the preset target value, and when the input unit receives input of a process execution instruction, the process may be executed in the equipment for the process according to the subsequently displayed recipe.

In the process execution mode, in the case of parameters for which no upper or lower limit is set as the allowable change range for the target value, when a value different from the target value is input, the control unit invalidates the changed value and restores it to the preset target value, the display unit subsequently displays the preset target value, and when the input unit receives input of a process execution instruction, the process may be executed in the equipment for the process according to the subsequently displayed recipe.

In the process execution mode, the target value cannot be changed in the case of a parameter for which an upper or lower limit is not set as an allowable change range for the target value.

In the process execution mode, the value changed from the preset target value is transmitted to the process equipment, but may not be updated in the recipe previously stored in the database.

In the registration mode, at least one parameter and a target value for each parameter are previously set according to each product and each process, so that the recipe may be stored in the database.

At least one parameter can be reset in the registration mode, the input unit receives input of parameters to be reset, and the recipe may be updated to the reset parameters and stored in the database.

The target value for the parameter can be reset in the registration mode, the input unit receive input of a target value to be reset, and the recipe may be updated to the reset target value and stored in the database.

In the registration mode, at least one of the upper limit and the lower limit, as the allowable change range of the target value of the parameter, can be reset, the input unit receives input of at least one of the upper and lower limits to be reset, and the recipe may be updated to at least one of the reset upper and lower limits and stored in the database.

The registration mode and the process execution mode can be selected at the input unit.

The recipe is stored in a database, and the database may be integrated into the managing apparatus or connected to the outside of the managing apparatus via a wired or wireless communication network.

The history of the process executed with the recipe corresponding to the input product and process may be further stored in the database.

In the display unit, the plurality of products and the plurality of processes may be provided as a list.

The managing apparatus may be either integrated into the process equipment or provided separately from the process equipment, and coupled to the process equipment via a wired or wireless communication network.

### [Advantageous Effects]

According to the present disclosure, there can be provided an apparatus for managing a manufacturing process of a battery more accurately and effectively, thereby maximizing production efficiency in the manufacturing process of the battery and improving the quality of the produced battery.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

Fig. 1 shows a schematic diagram of an apparatus for managing a manufacturing process of a battery according to an embodiment of the present disclosure;
Fig. 2 shows an example of a recipe that can be applied to a manufacturing process of a battery according to an embodiment of the present disclosure; and
Figs. 3 and 4 show flow charts of methods for executing a process execution mode in the managing apparatus of Fig. 1.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, throughout the description, when a portion is referred to as "including" or "comprising" a certain component, it means that the portion can further include other components, without excluding the other components, unless explicitly described to the contrary.

Now, an apparatus managing for a manufacturing process of a battery according to an embodiment of the present disclosure will be described with reference to the accompanying drawings.

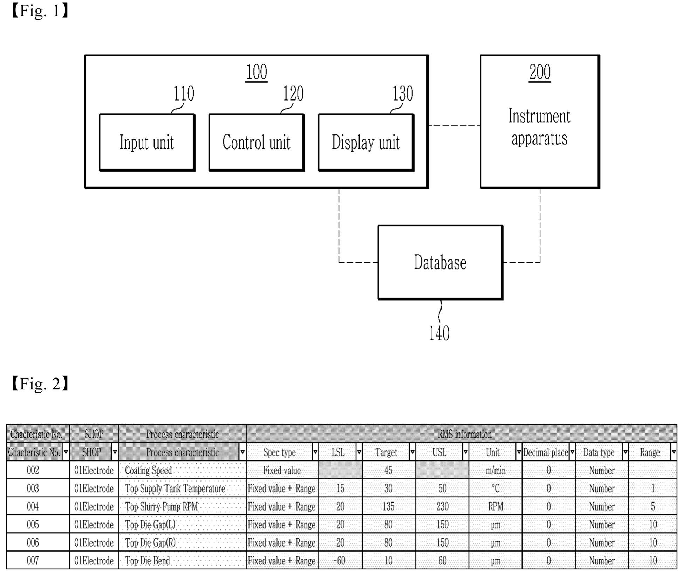

Fig. 1 shows a schematic diagram of an apparatus 100 for managing a manufacturing process of a battery (hereinafter referred to as "managing apparatus") according to an embodiment of the present disclosure.

First, the managing apparatus 100 may be integrated into an equipment apparatus 200 of the manufacturing process of a battery, or may be provided separately from the equipment apparatus 200 for the manufacturing process of the battery, and connected to the equipment apparatus 200 via a wired or wireless communication network to control the equipment apparatus 200. As such, the apparatus may be modified and changed in various ways in conformity with the environment to which the invention is applied.

The managing apparatus 100 roughly includes an input unit 110, a control unit 120, and a display unit 130. The managing apparatus 100 further includes a database 140.

The input unit 110 receives input of at least one selected from a plurality of battery products and at least one selected from a plurality of processes related to battery manufacturing. When attempting to operate the equipment apparatus 200 for the manufacturing process of the battery, an operator selects at least one of the plurality of products in the input unit 110, and also selects at least one of the plurality of processes and inputs them into the input unit.

The input unit 110 may be realized as, for example, a keyboard, a pointing device, a touch input device, or the like. The pointing device may be, for example, as a mouse, a touch pen, a touch pad, a trackball, or the like. A touch input device may be, for example, a touch screen, a touch pad, or the like.

The display unit 130 outputs (displays) a recipe corresponding to the selected product and process. The display unit 130 may be, for example, a monitor.

The control unit 120 controls the input unit 110 and the display unit 130 in conjunction with the database 140. In addition, the control unit 120 further controls the equipment apparatus 200 for the manufacturing process of the battery.

The control unit 120 may include at least one processor and memory, i.e., a processing circuit. The memory stores processor-executable instruction words that, when executed by the processor, cause the processor to execute one or more operations described herein. The processor may include a microprocessor, application specific integrated circuit (ASIC), field programmable gate array (FPGA), etc., or a combination thereof. The memory may include, but is not limited to, electronic, optical, magnetic, or any other storage or transmission device capable of providing program instruction words to the processor. The memory may be a floppy disk, CD-ROM, DVD, magnetic disk, memory chip, ASIC, FPGA, ROM, RAM, electrically-erasable programmable ROM (EEPROM), erasable-programmable ROM (EPROM), flash memory, optical media, or any other suitable memory from which the processor can read instruction words. The instruction words may include code in any suitable computer programming language. The control unit 120 may include one or more computing devices or servers capable of executing various functions.

The processors suitable for the execution of the invention include, by way of example, general purpose and dedicated microprocessors and any one or more processors of any type of digital computer. Typically, a processor will receive instruction words and data from a read-only memory or a random access memory, or both. Elements of a computer include a processor for executing actions according to instructions and one or more memory devices for storing instruction words and data. Typically, a computer also includes one or more large storage devices for storing data, such as magnetic, magneto-optical disks or optical disks, or may be operatively coupled to receive data therefrom or transmit data thereto. However, a computer need not necessarily have the above devices. In addition, a computer may be incorporated into other devices, such as a mobile phone, a personal digital assistant (PDA), a mobile audio or video player, a game console, a GPS receiver, or a portable storage device, such as a universal serial bus(USB) flash drive. The devices suitable for storing computer program instruction words and data include, for example, semiconductor memory devices such as EPROM, EEPROM, and flash memory devices; magnetic disks, for example, such as internal hard disks or removable disks; and all forms of non-volatile memory, media and memory devices, including CD-ROM and DVD-ROM disks. The processor and memory may be supplemented by or integrated in, special purpose logic circuits.

The database 140 may be a database configured to store and/or maintain any of the information described herein. The database 140 may be stored in any suitable type and format of data structure, such as an array, flat file, depicted file, or any other type and format of database file. In one embodiment, the database 140 may store preset recipes in advance, as described below. In some embodiments, a database may be accessed using one or more memory addresses or index values. The database 140 may be accessed by modules of the control unit 120 or a network (not shown). In some embodiments, the database 140 may be integrated with the managing apparatus 100. In some embodiments, database 140 may exist outside of the managing apparatus 100 and may be accessed via a network. In some embodiments, the database 140 may be distributed across multiple different computer systems or multiple different equipment apparatus 200, and may be accessed via a network and/or appropriate computer bus interface. The control unit 120 may store the results of any or all calculations, decisions, selections, identifications, or operations as appropriate values indexed in one or more databases 140.

A network (not shown) may also include any number of computing devices (e.g., computers, servers, routers, network switches, etc.) configured to receive and/or transmit data within the network. The network may further include any number of fixed wiring and/or wireless connections.

Recipes may be prepared in advance in various ways to correspond to each of a plurality of products and each of a plurality of processes.

The plurality of products may be variously set to specific detailed model names for each type of battery, such as a pouch-type battery, a prismatic battery, and a cylindrical battery as the types of batteries that are the finished products (finally produced products), or can be variously set to detailed components or detailed model names for each component constituting the battery, for example, a cathode, an anode, a separator, an electrode assembly, a case, or the like. Furthermore, the plurality of processes may include various processes for manufacturing the corresponding component. For example, they may include more detailed processes belonging to the relevant process among the electrode process, assembly process, and formation process. Since the plurality of products and the plurality of processes described above correspond to an example, the present disclosure is not limited to those described above and can be variously applied as long as it is a manufacturing process of a battery.

A recipe refers to data including at least one parameter and a target value for each parameter applied to the equipment apparatus 200 for the process for manufacturing the product. The target value can be changed for at least a part of at least one parameter. For example, the target value can be adjusted in conformity with changes in the environment at that time, such as the specific location and time where the process is executed. The allowable range for change of the target value includes at least one of an upper limit and a lower limit. That is, the target value is adjusted, but change in the target value is allowed only within a preset range. As for this allowable range, only the upper limit may be set, only the lower limit may be set, or both the upper and lower limits may be set. On the other hand, in some cases, there are parameters in which changes of values are not allowed. In this case, the allowable change range is not set and the target value may be a fixed value. The recipe may further include various information required for the manufacturing process of the battery, such as units for target values, spec type, decimal places, data type, and the like. Fig. 2 shows an example of a recipe.

Meanwhile, the managing apparatus 100 is largely operated in two modes: a registration mode that pre-sets recipes corresponding to products and processes, and a process execution mode that transmits process execution instructions according to the recipes corresponding to products and processes to the equipment for the process.

In registration mode, an engineer who designs battery products and processes sets a recipe in advance according to a spec of a product, a parameter required for a manufacturing process of the product, an input value that is input for the parameter, and the like, and registers the recipe in the database 140.

In the process execution mode, an operator who actually execute the battery product and process retrieves a preset recipe and operates the equipment apparatus 200 with the corresponding recipe or a modified recipe.

The input unit 110 receives input of at least one selected from a plurality of products and at least one selected from a plurality of processes, respectively. At this time, for example, the names or codes of a plurality of products and a plurality of processes may be first displayed in list form on the display unit 130, and then selected from the list through the input unit 110. Alternatively, for example, the names or codes of a plurality of products and a plurality of processes may be input into the input unit 110.

The display unit 130 downloads from the database 140 a recipe corresponding to the product and process input into the input unit 110 and primarily displays it.

If the process can be executed according to the recipe, the operator inputs a command to execute the process via the input unit 110. For example, this may be a method of pressing an operation execution button. When a process execution instruction is input at the input unit 110, the process is executed on the equipment for that process according to the primarily displayed recipe.

On the other hand, as mentioned above, depending on the parameter, the target value may be changed before executing the process. For example, the target value can be adjusted in conformity with changes in the environment at that time, such as the specific location and time at which the process is executed, and then the process can be executed. For this purpose, the input unit 110 receives input of a value changed from the preset target value of the recipe primarily displayed on the display unit 130. The changed value is transmitted to the control unit 120.

The control unit 120, which has received transmission of the changed value, determines whether the changed value falls within a range preset in the recipe. As mentioned above, the preset range may be one in which an upper limit is set depending on the parameter, or may be one in which only the lower limit is set, or one in which both the upper and lower limits are set.

If the changed value falls within a range preset in the recipe, the control unit 120 temporarily changes the recipe to the changed value. The display unit 130 displays the recipe with the changed value. Next, when the input unit 110 receives input of a process execution instruction, the process execution instruction is transmitted to the equipment apparatus 200 for the process. This means that the process is executed with the recipe of the changed value and therefore, the process is executed in the equipment apparatus 200 for the process according to the recipe including the changed value.

On the other hand, if the changed value does not fall within the range preset in the recipe, the control unit 120 invalidates the changed value and restores the recipe to the preset target value. The display unit 130 displays the recipe with a preset target value. At this time, additionally, an alarm message indicating that an error is found in the changed value may be displayed on the display unit 130, and an alarm warning sound may be output.

At this time, the operator can change the input value and again input it into the recipe. When the input unit 11 receives an input with the input value changed again, and the input value falls within a preset range, a recipe including the changed value is displayed on the display unit 130 as mentioned above. When the input unit 110 receives input of a process execution instruction, the process is executed in the equipment apparatus 200 for the process according to the recipe including the changed values.

Alternatively, the process may be executed according to the target value preset in the recipe without changing and again inputting the input value. When the input unit 110 receives input of a process execution instruction without changing the input value again, the process execution instruction is transmitted to the equipment apparatus 200 for the process, and the process is executed in the equipment apparatus 200 for the process according to a preset recipe.

In the process execution mode, the value changed from the preset target value is transmitted to the relevant process equipment and the process is executed, but is not updated and stored in the recipe previously stored in the database. That is, changing and storing a value from a preset target value (i.e., updating and storing a preset target value) is possible in the registration mode. This is because in the process execution mode, the preset target value is temporarily changed (adjusted) in consideration of special environmental changes limited during the process or in conformity with minute environmental changes during the process.

To permanently change a preset target value, i.e., to store a recipe with a changed preset target value in the database 140 and then to continuously use the changed recipe in the process, the engineer (designer) must change and update the target value in the registration mode.

On the other hand, when an operator inputs a change value for a parameter for which changes of the target value are not allowed, the input unit 110 may be set as not inputting the change value, or although the input unit 110 receives input of a change value, the control unit 120 may invalidate the change value and restore it to a preset target value.

When a process is executed in the equipment apparatus 200 for the process, the recipe applied at that date and time may be stored in the database 140. The recipe (preset recipe or changed recipe) information applied at that time can be stored in the database 140, along with information about the process date, time, temperature, pressure, and other environmental information at the time of the process, management information for the factory, line, equipment, etc. where the process is executed.

Explaining the registration mode again, the engineer (designer) can again set parameters. For example, parameter items that are no longer necessary can be deleted, or new parameter items can also be added. Preset input values for parameters can also be adjusted and stored. In the registration mode, when the preset target value is changed, the changed value is stored in the database 140. That is, when the recipe is loaded in a subsequent process execution mode, the changed target value (i.e., the updated and stored target value) is displayed on the display unit 130.

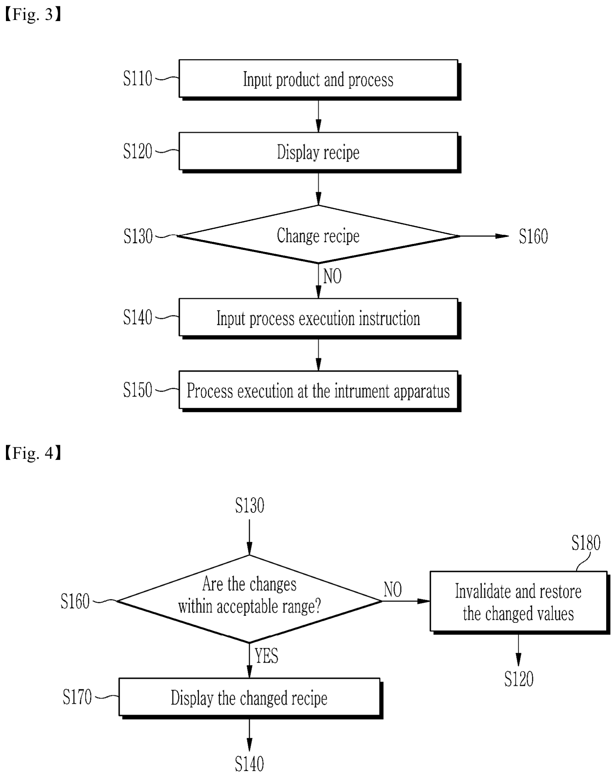

Figs. 3 and 4 show flow charts of methods for executing a process execution mode in the managing apparatus 100 of Fig. 1.

At the input unit 110, a step(S110) of receiving input of at least one selected from a plurality of products and at least one selected from a plurality of processes is executed.

Next, a step (S120) of downloading from the database 140 a recipe corresponding to the product and process input into the input unit 110 and primarily displaying the recipe is executed. At this time, a recipe including at least one parameter applied to the equipment apparatus 200 for the process and the target value of each parameter is displayed.

If there is no change to the recipe, for example, if there is a change to the target value (S130), the process is executed in the equipment apparatus 200 for the process (S150) when the input unit 110 receives input of a process execution instruction(S140).

If there is a change to the recipe, for example, if a change value of the target value is input (S130), step S160 of Fig. 4 is executed.

The control unit 120, which has received transmission of the changed value, executes a step (S160) of determining whether the changed value falls within a range preset in the recipe.

If the changed value is a value falling within the range preset in the recipe, a step S170 of displaying the changed recipe on the display unit 130 is executed, and then steps S140 and S150 are executed in sequence.

If the changed value is not a value falling within the range preset in the recipe, the control unit 120 executes a step (S180) of invalidating the changed value and restoring the recipe to the preset target value, and again executes a step S120 of displaying the recipe on the display unit 130 and executes the steps subsequent to step S120 shown in FIG. 3 in sequence.

In Figs. 3 and 4, for other explanations relating to the method of executing the process execution mode in the managing apparatus 100 of Fig. 1, the explanation of the portions overlapping with those described above for the managing apparatus 100 of Fig. 1 will be omitted, and reference will be made to the explanation of Fig. 1.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: managing apparatus
110: input unit
120: control unit
130: display unit
140: database
200: equipment apparatus

## Claims

1. An apparatus for managing a manufacturing process of a battery, the apparatus comprising:
an input unit that receives input of at least one selected from a plurality of products and at least one selected from a plurality of processes;
a display unit that outputs recipes corresponding to the selected products and processes; and
a control unit that controls the input unit and the display unit,
wherein recipes are respectively preset corresponding to each of the plurality of products and each of the plurality of processes.

2. The apparatus for managing a manufacturing process of a battery of claim 1, wherein:
the apparatus for managing a manufacturing process of a battery executes,
a registration mode that presets recipes corresponding to products and processes; and
a process execution mode that transmits process execution instructions according to the recipes corresponding to products and processes to the equipment for the process.

3. The apparatus for managing a manufacturing process of a battery claim 2, wherein:
the recipe includes at least one parameter that is applied to the equipment apparatus for the process according to products and processes, and a target value for each parameter.

4. The apparatus for managing a manufacturing process of a battery claim 3, wherein:
the target value for at least a part of the at least one parameter is changeable, and an allowable change range includes at least one of an upper limit and a lower limit.

5. The apparatus for managing a manufacturing process of a battery claim 4, wherein:
in the process execution mode,
the display unit primarily displays recipes corresponding to the input products and processes, and
when the input unit receives input of a process execution instruction, the process is executed in the process equipment according to the primarily displayed recipe.

6. The apparatus for managing a manufacturing process of a battery claim 5, wherein:
in the process execution mode,
when the input unit receives input of a value changed from the preset target value of the displayed recipe, the changed value is transmitted to the control unit.

7. The apparatus for managing a manufacturing process of a battery claim 6, wherein:
in the process execution mode,
the control unit determines whether the changed value falls within the range of the upper and lower limits, and when the value falls within the range of the upper and lower limits, the recipe is temporarily changed to the changed value,
the display unit subsequently displays the changed value, and
when the input unit receives input of a process execution instruction, the process is executed in the equipment for the process according to the subsequently displayed recipe.

8. The apparatus for managing a manufacturing process of a battery of claim 6, wherein:
in the process execution mode,
the control unit determines whether the changed value falls within the range of the upper and lower limits, and when the value is outside the range of the upper and lower limits, the changed value is invalidated and restored to the preset target value,
the display unit subsequently displays the preset target value, and
when the input unit receives input of a process execution instruction, the process is executed in the equipment for the process according to the subsequently displayed recipe.

9. The apparatus for managing a manufacturing process of a battery of claim 6, wherein:
in the process execution mode,
in the case of parameters for which no upper or lower limit is set as the allowable change range for the target value,
when a value different from the target value is input, the control unit invalidates the changed value and restores it to the preset target value,
the display unit subsequently displays the preset target value, and
when the input unit receives input of a process execution instruction, the process is executed in the equipment for the process according to the subsequently displayed recipe.

10. The apparatus for managing a manufacturing process of a battery of claim 6, wherein:
in the process execution mode, the target value cannot be changed in the case of a parameter for which an upper or lower limit is not set as an allowable change range for the target value.

11. The apparatus for managing a manufacturing process of a battery of claim 6, wherein:
in the process execution mode, the value changed from the preset target value is transmitted to the process equipment, but is not updated in the recipe previously stored in a database.

12. The apparatus for managing a manufacturing process of a battery of claim 2, wherein:
in the registration mode, at least one parameter and a target value for each parameter are previously set according to each product and each process, so that the recipe is stored in a database.

13. The apparatus for managing a manufacturing process of a battery of claim 12, wherein:
at least one parameter can be reset in the registration mode,
the input unit receives input of parameters to be reset, and
the recipe is updated to the reset parameters and stored in the database.

14. The apparatus for managing a manufacturing process of a battery of claim 12, wherein:
the target value for the parameter can be reset in the registration mode,
the input unit receive input of a target value to be reset, and
the recipe is updated to the reset target value and stored in the database.

15. The apparatus for managing a manufacturing process of a battery of claim 12, wherein:
in the registration mode, at least one of the upper limit and the lower limit, as the allowable change range of the target value of the parameter, can be reset,
the input unit receives input of at least one of the upper and lower limits to be reset, and
the recipe is updated to at least one of the reset upper and lower limits and stored in the database.

16. The apparatus for managing a manufacturing process of a battery of claim 2, wherein:
the registration mode and the process execution mode can be selected at the input unit.

17. The apparatus for managing a manufacturing process of a battery of claim 1, wherein:
the recipe is stored in a database, and the database is integrated into the apparatus for managing a manufacturing process of a battery or exist outside of the apparatus for managing a manufacturing process of a battery and can be accessed via a wired or wireless communication network.

18. The apparatus for managing a manufacturing process of a battery of claim 1, wherein:
the history of the process executed with the recipe corresponding to the input product and process is further stored in a database.

19. The apparatus for managing a manufacturing process of a battery of claim 1, wherein:
in the display unit, the plurality of products and the plurality of processes are provided as a list.

20. The apparatus for managing a manufacturing process of a battery of claim 1, wherein:
the apparatus for managing a manufacturing process of a battery is either integrated into the process equipment or provided separately from the process equipment, and coupled to the process equipment via a wired or wireless communication network.
